# EUROPEAN PATENT APPLICATION

(11) **EP 4 703 184 A1**
(43) Date of publication of application: **04.03.2026**
(21) Application number: 25162542.2
(22) Date of filing: 10.03.2025
(51) Int. Cl.: B60L 53/14, B60L 53/31, B60L 53/62

(54) **POWER DISTRIBUTION SYSTEM, POWER DISTRIBUTION METHOD AND CHARGING PILE**

(30) Priority: 03.09.2024 CN 202411225863
(71) Applicant: Wanbang Digital Energy Co., Ltd., Changzhou, Jiangsu 213100 (CN)
(72) Inventor: Xu, Ye, Changzhou, Jiangsu (CN); Qi, Fenggang, Changzhou, Jiangsu (CN); Hu, Jing, Changzhou, Jiangsu (CN)
(74) Representative: Becker Kurig & Partner Patentanwälte mbB

(57) **Abstract**

A power distribution system, a power distribution method and a charging pile are disclosed. The power distribution system includes a first annular structure (100), a second annular structure (200), several power modules and M output terminals. The first annular structure (100) includes M first relay groups connected end to end in a ring, with a first connector set between every two adjacent first relay groups. The second annular structure (200) includes M second relay groups connected end to end in a ring, with a second connector set between every two adjacent second relay groups. Several power modules are distributed to connect with the first connectors and second connectors. Among the M output terminals, one output terminal corresponds to and is directly connected with one first connector and one second connector, and each output terminal is at least directly connected to one power module.

## Description

### BACKGROUND

### Technical Field

The present disclosure relates to the field of power distribution technology, specifically to a power distribution system, a power distribution method, and a charging pile.

### Description of Related Art

With regard to technology related to DC charging piles, the technology mainly includes integrated charging piles and split charging piles. Specifically, an integrated charging pile may only provide charging service for 1 to 2 parking spaces; while a split charging pile adopts a structure of rectifier cabinet + terminal, one rectifier cabinet may be equipped with multiple terminals, and each terminal may simultaneously provide charging service for 1 to 2 parking spaces. Therefore, charging piles often adopt split charging piles to provide charging services.

At present, split charging piles primarily employ either Power Distribution Unit (PDU) assembly solutions or circular relay solutions to achieve power distribution. The PDU assembly solution offers highly flexible power distribution; however, such solution requires numerous relays, resulting in substantial costs. Conversely, while the circular relay solution may not provide the same level of flexibility in power distribution as the PDU assembly solution, it necessitates fewer relays, thereby reducing costs. Consequently, many charging piles opt for the circular relay solution.

In the existing technology, a utility model patent with application number "202123365645.X" and titled "A Device for Expanding Charging Parking Spaces" discloses a circular relay solution. The solution includes multiple power modules interconnected through relays in a hand-to-hand manner, forming a circular structure. Each power module in this configuration has a power capacity of 30kW.

This power distribution solution has the following issues.

1. In this solution, all power modules form a circular structure. For charging piles with higher power, each relay and cable in this circular structure needs to carry a large current, resulting in high costs. For example, when the output current of the rectifier cabinet is defined as 500A, all relays inside the cabinet need to be adjusted to 500A relays. Currently, mainstream 250A relays in the market may be purchased for just over 90 yuan, while 500A relays use ceramic as insulation material to ensure electrical performance, with a cost of about 300 yuan per relay. Furthermore, for the cables connecting the rectifier cabinet and charging terminals, a 500A current requires a bus bar with a cross-sectional area of 150mm², while a 250A current only needs a bus bar with a cross-sectional area of 60mm². In other words, the cost of one 500A relay loop is much higher than the cost of two 250A relay loops.

2. The solution employs 30kW modules, which are numerous and relatively costly. With the advancement of charging pile technology, module suppliers have introduced 40kW modules compatible with the 30kW modules, maintaining the same physical dimensions but improving efficiency by 33%. The price of 40kW modules is only marginally higher than that of 30kW modules. Consequently, utilizing 40kW modules in high-power charging piles may reduce the quantity required, resulting in lower overall costs. For example, in a 600kW charging pile, 20 modules of 30kW would be necessary to achieve the 600kW power output. However, only 15 modules of 40kW would be required to attain the same power output, thereby reducing the total cost.

### SUMMARY

The present disclosure provides a power distribution system to address the technical issue of high costs associated with existing circular relay solutions, where all relays form a single circular structure for power distribution. The present disclosure utilizes two low-current relays to replace a single high-current relay, forming a dual-ring parallel distribution solution. This approach offers lower costs and more flexible power distribution.

The technical solution adopted by the present disclosure is as follows:

An aspect of the present disclosure provides a power distribution system, including: a first annular structure, wherein the first annular structure includes M first relay groups, M≥3, the M first relay groups are connected end to end in a ring shape, and a first connector is disposed between every two of the adjacent first relay groups; a second annular structure, wherein the second annular structure includes M second relay groups, the M second relay groups are connected end to end in a ring shape, and a second connector is disposed between every two of the adjacent second relay groups; a plurality of power modules, wherein a portion of the plurality of power modules are configured to connect with the first connector, and another portion are configured to connect with the second connector; M output terminals, wherein one output terminal corresponds to and is directly connected to one first connector and one second connector, and at least one of the first connector and second connector corresponding to and directly connected to each output terminal is connected with a power module.

Another aspect of the present disclosure provides a power distribution method for the power distribution system as described above, including: detecting whether power distribution is triggered; if so, performing a first round of distribution for each output terminal that needs charging, distributing the power module group directly connected to each output terminal correspondingly to each output terminal; performing a second round of distribution for each output terminal that needs charging according to the power distribution type, distributing the idle power module group to each output terminal. Optionally, the power distribution type is first-come-first-served distribution principle, that is, the second round of distribution is performed for each output terminal in the order of first-come-first-served. Alternatively, the power distribution type is based on power priority distribution, that is, the second round of distribution is performed for each output terminal in batches according to power priority.

Yet another aspect of the present disclosure provides a charging pile, which includes the power distribution system as described above, or, adopts the power distribution method as described above.

The advantageous effects of the present disclosure are as follows.

The power distribution system provided by the present disclosure adopts a double-loop parallel mode, using two low-current relays to replace one high-current relay, which reduces the cost of relays and external cables. Moreover, the present disclosure uses high-power power modules to replace low-power power modules, reducing the number of power modules and lowering the total cost of power modules and their tail plug harnesses; thus achieving a low-cost high-current power distribution solution.

### BRIEF DESCRIPTION OF THE DRAWINGS

FIG. 1 is a schematic view of one of the topological structures of a power distribution system according to the first embodiment of the present disclosure.
FIG. 2 is a front view of a rectifier cabinet structure according to the second embodiment of the present disclosure.
FIG. 3 is a perspective view of a rectifier cabinet structure according to the second embodiment of the present disclosure.
FIG. 4 is an enlarged view of region I in FIG. 3.
FIG. 5 is a schematic view of the overall process of a power distribution method according to the third embodiment of the present disclosure.
FIG. 6 is a schematic view of the first-come-first-served distribution process in FIG. 5.
FIG. 7 is a flow chart of the power priority distribution process in FIG. 5.
FIG. 8 is a schematic view showing the positions of idle power module groups according to the third embodiment of the present disclosure.

### DESCRIPTION OF THE EMBODIMENTS

The following description will clearly and completely explain the technical solutions in the embodiments of the present disclosure in conjunction with the accompanying drawings. Clearly, the described embodiments are only a part of the embodiments of the present disclosure, not all of them. Based on the embodiments in the present disclosure, all other embodiments obtained by those skilled in the art without creative effort fall within the scope of protection of the present disclosure.

### First Embodiment:

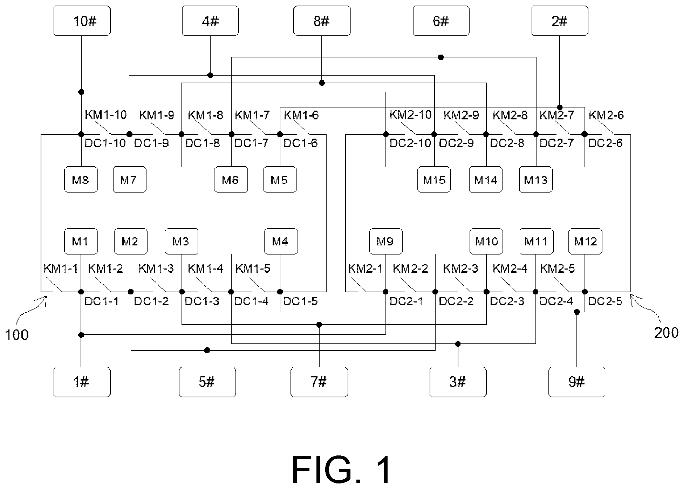

As shown in FIG. 1, the present embodiment provides a power distribution system, which includes two annular structures, namely a first annular structure 100 and a second annular structure 200. The first annular structure 100 includes M first relay groups, where M≥3 and M is a positive integer. The M first relay groups are connected end to end in a ring shape, with a first connector disposed between every two of the adjacent first relay groups, totaling M first connectors. The second annular structure 200 includes M second relay groups, with the M second relay groups connected end to end in a ring shape, and a second connector disposed between every two of the adjacent second relay groups, totaling M second connectors.

Furthermore, the power distribution system of the present embodiment also includes several power modules and M output terminals. There are at least M power modules, with a portion configured to be directly connected to the first connectors, and another portion configured to be directly connected to the second connectors, which means these power modules are distributed into two annular structures. Among the M output terminals, one output terminal corresponds to and is directly connected to one first connector in the first annular structure 100 and one second connector in the second annular structure 200. No relay is disposed between the first connector and the corresponding second connector. Moreover, at least one of the first connector and second connector corresponding to and directly connected to each output terminal is connected to a power module. In other words, the m-th output terminal corresponds to and is directly connected to the m-th first connector in the first annular structure 100 and the m-th second connector in the second annular structure 200, where m is an integer from 1 to M. Additionally, at least one of the m-th first connector and the corresponding m-th second connector is connected to a power module.

For example, as shown in FIG. 1, the number of output terminals may be defined as needed. Assuming 10 output terminals are required, set M=10, with the 10 output terminals numbered 1# to 10#. The first annular structure 100 includes 10 first relay groups, numbered KM1-1 to KM1-10, and 10 first connectors, numbered DC1-1 to DC1-10. The second annular structure 200 includes 10 second relay groups, numbered KM2-1 to KM2-10, and 10 second connectors, numbered DC2-1 to DC2-10. In addition, this power distribution system further includes several power modules, with at least one of each first connector and its corresponding second connector connected to a power module. The figure shows 15 power modules, respectively numbered M1 to M15, distributed between the two annular structures, with each output terminal connected to one or two power modules through directly connected connectors. In other embodiments, the number of power modules may be set to 20, with each first connector and its corresponding second connector each connected to one power module, and each output terminal directly connected to two power modules. In other words, the number of power modules is set according to requirements, and the total number of power modules may be obtained by dividing the total power of the system by the power of a single power module, with all power modules having the same power. Furthermore, the quantity M may also be defined as needed.

Thus, the power distribution system provided in the present embodiment forms two annular structures. Compared to the existing technology with only one annular structure, this embodiment distributes the power modules into two annular structures, reducing the current carried by the relays in each annular structure. For example, when the number of power modules is the same in both annular structures, each relay only needs to carry half of the original current. For instance, for a 600kW, 500A charging pile, the current each relay needs to carry is reduced from the original 500A to 250A. Although the number of relays has doubled, the cost of two low-current relays is far lower than the cost of one high-current relay, significantly reducing the total cost of relays. Moreover, the cross-sectional area of each external cable (such as the cables connecting between relay groups to output terminals, i.e., the cables between the rectifier cabinet and charging terminals) may also be reduced, for example, from the original 150mm² to about 60mm², thus lowering the total cost of external cables. Therefore, the power distribution system of this embodiment has a higher cost advantage. In addition, directly connecting the first connectors and corresponding second connectors to the output terminals ultimately forms M output terminals in an annular structure. Each output terminal can not only be distributed with directly connected power modules but also invoke upon other power modules in the two annular structures, achieving flexible power distribution.

The total number of power modules may be obtained from the total power of the power distribution system and the power of a single power module. Assuming that X power modules are connected to the first connectors in the first annular structure 100, and Y power modules are connected to the second connectors in the second annular structure 200, then X+Y=P/E, where P is the total power of the power distribution system, E is the power of a single power module, both in unit of kW. The power of a single power module may be set according to requirements, for example, 30kW, 40kW, 50kW or higher.

Preferably, several power modules are distributed as evenly as possible, i.e., as uniformly as possible, between connections to the first connectors and connections to the second connectors, that is, -1≤X-Y≤1. In other words, if the total number of power modules is an even number, each annular structure is allocated half the number P/2E of power modules; if the total number of power modules is an odd number, the number of power modules allocated to one annular structure is P/2E-1/2, and the number of power modules allocated to the other annular structure is P/2E+1/2, differing by only one power module. For example, as shown in FIG. 1, there are 15 power modules in total, with 8 and 7 power modules allocated to the two annular structures respectively. In this way, the current in both annular structures is lower, which may better reduce costs.

As a preferred embodiment of this embodiment, E is set to 40, meaning power modules with 40kW power are adopted. In existing technology, schemes generally use 30kW power modules. If 30kW power modules were to be used, the total number of power modules required would be P/30. However, in this embodiment, 40kW power modules are preferably used throughout, so the total number of power modules required is P/40. The total number of power modules is reduced by P/30-P/40=P/120, and the number of tail plug harnesses for power modules is also reduced by P/120, lowering the total cost of power modules.

Taking FIG. 1 as an example, there are 10 output terminals, and the charging pile power is 600kW. If 30kW power modules were used, the total number of power modules required would be 20, with 10 power modules disposed in each annular structure when evenly distributed. However, in this embodiment, 40kW power modules are used, so the total number of power modules required is 15, reducing the total number of power modules by 5, and also reducing the number of tail plug harnesses for power modules by 5, thus lowering the total cost of power modules. Specifically, in actual distribution, the number of power modules X in the first annular structure 100 is 8, for example, defining that DC1-4 and DC1-8 in the first annular structure 100 are not connected to power modules, and the number of power modules Y in the second annular structure 200 is 7, for example, defining that DC2-2, DC2-6 and DC2-10 in the second annular structure 200 are not connected to power modules. In other embodiments, the positions of connectors not connected to power modules in each annular structure may be set as needed, as long as it is ensured that each output terminal is directly connected to at least one power module. Furthermore, it is preferable to set the number of power modules directly connected to each first connector with power modules and the number of power modules directly connected to each second connector with power modules to be the same, for example, 1 for each in FIG. 1, to facilitate subsequent power distribution.

More preferably, in this embodiment, M output terminals are distributed sequentially in an annular structure, with a first relay group and a second relay group disposed between every two of the adjacent output terminals. The power modules directly connected to the first connector and the second connector corresponding to one output terminal form a power module group. Preferably, the power of the power module groups directly connected to M output terminals is set to be the same, that is, the total power is evenly distributed to each output terminal, facilitating subsequent calculation and power distribution. For example, when P/E=jM, where j is a positive integer, the power modules may be evenly distributed to each output terminal. Alternatively, preferably, the power of the power module groups directly connected to M output terminals is set to be sequentially distributed in an alternating pattern with intervals, that is, the number of power modules in the power module groups directly connected to each output terminal is sequentially distributed in an alternating pattern with intervals. For example, when P/E-kM=M/2, where k is a positive integer, meaning that after evenly distributing the total power modules to each output terminal as much as possible, the remaining number of modules is half the number of output terminals. Taking FIG. 1 as an example, there are 10 output terminals in total, with a total power of 600kW, and each power module is 40kW. The output terminals are set to form a ring shape in the sequence of 1#, 5#, 7#, 3#, 9#, 2#, 6#, 8#, 4#, 10# and back to 1# (the arrangement order of each number may be set as needed). The power module group directly connected to the first output terminal 1# includes two power modules, with a total power of 80kW; the power module group directly connected to the second output terminal 5# includes one power module, with a total power of 40kW; the power module group directly connected to the third output terminal 7# again includes two power modules, with a total power of 80kW; and so on. That is, odd-numbered output terminals are directly connected to two power modules, while even-numbered output terminals are directly connected to one power module, with only one power module difference between two of the adjacent output terminals, sequentially distributed in an alternating pattern with intervals. In other embodiments, it may also be set that odd-numbered output terminals are directly connected to one power module, while even-numbered output terminals are directly connected to two power modules. With this arrangement, during power distribution, there will be no direct invoking between adjacent output terminals of 40kW power module groups and 40kW power module groups, or between 80kW power module groups and 80kW power module groups, facilitating system calculation and invoking of the power pool. If 40kW power module groups were concentrated in distribution, it would be difficult for the corresponding output terminals to be quickly allocated with the required power, while concentrating 80kW power module groups may lead to power waste and uneven distribution. In other cases, if the power of M output terminals cannot be set to be the same or sequentially distributed in an alternating pattern with intervals, the power should still be distributed as evenly and alternately as possible to facilitate subsequent calculation and power distribution. For example, in a case with 6 output terminals and 8 40kW power modules, the power of each output terminal may be distributed in an annular structure in a pattern of 80kW, 40kW, 40kW, 80kW, 40kW, 40kW, which is as even and alternating as possible.

It should be noted that each annular structure in this embodiment includes a positive loop and a negative loop. Specifically, for the first annular structure 100, each first relay group includes a first positive relay and a first negative relay, totaling M first positive relays and M first negative relays. The M first positive relays are connected end to end to form a first positive loop, with a first positive connector disposed between every two of the adjacent first positive relays for connecting the corresponding output terminal and the positive electrode of the power module. The M first negative relays are connected end to end to form a first negative loop, with a first negative connector disposed between every two of the adjacent first negative relays for connecting the corresponding output terminal and the negative electrode of the power module. For the second annular structure 200, each second relay group includes a second positive relay and a second negative relay, totaling M second positive relays and M second negative relays. The M second positive relays are connected end to end to form a second positive loop, with a second positive connector disposed between every two of the adjacent second positive relays for connecting the corresponding output terminal and the positive electrode of the power module. The M second negative relays are connected end to end to form a second negative loop, with a second negative connector disposed between every two of the adjacent second negative relays for connecting the corresponding output terminal and the negative electrode of the power module. Taking FIG. 1 as an example, there are a total of 40 relays, including 10 first positive relays, 10 first negative relays, 10 second positive relays, and 10 second negative relays.

The power distribution system of this embodiment may be used for charging piles, that is, each output terminal is formed as a gun port for charging electric vehicles. In other embodiments, this power distribution system may also be applied to other charging equipment.

From the above content, it may be known that the power distribution system provided in this embodiment adopts a dual-ring parallel mode, using two low-current relays to replace one high-current relay, and using high-power power modules to replace low-power power modules to achieve a low-cost high-current power distribution solution.

### Second embodiment:

This embodiment provides a charging pile adopting the power distribution system described in First Embodiment. This charging pile is a split-type DC charging pile, which includes one rectifier cabinet and M terminals.

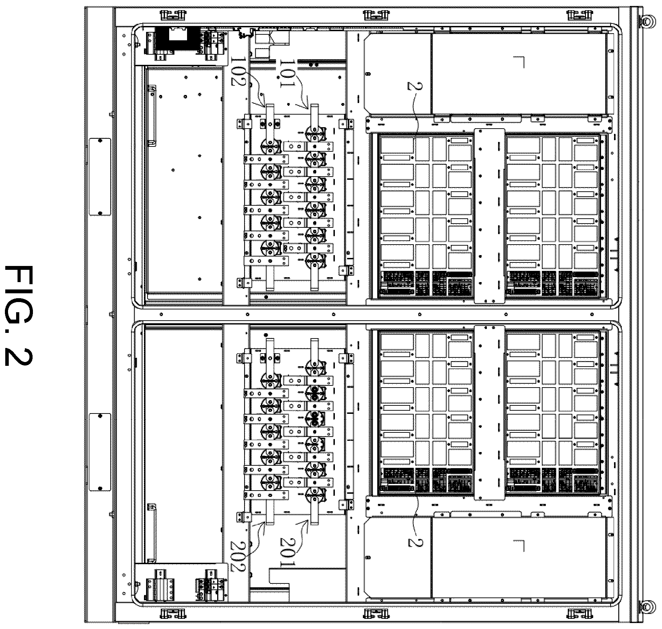

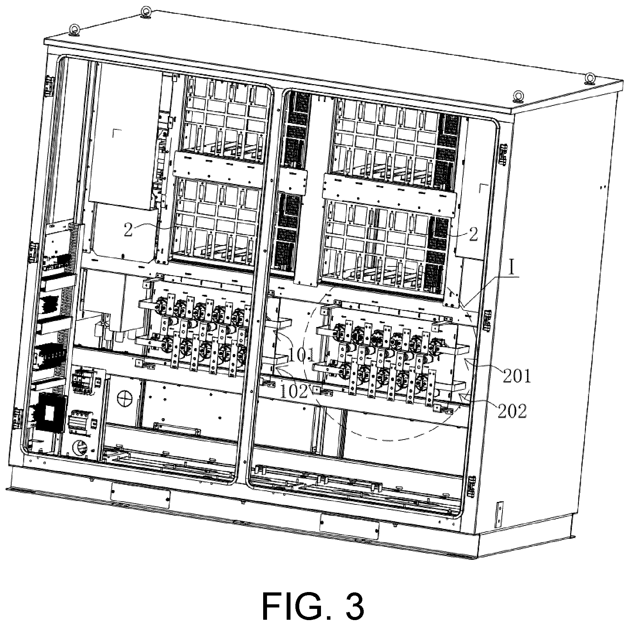

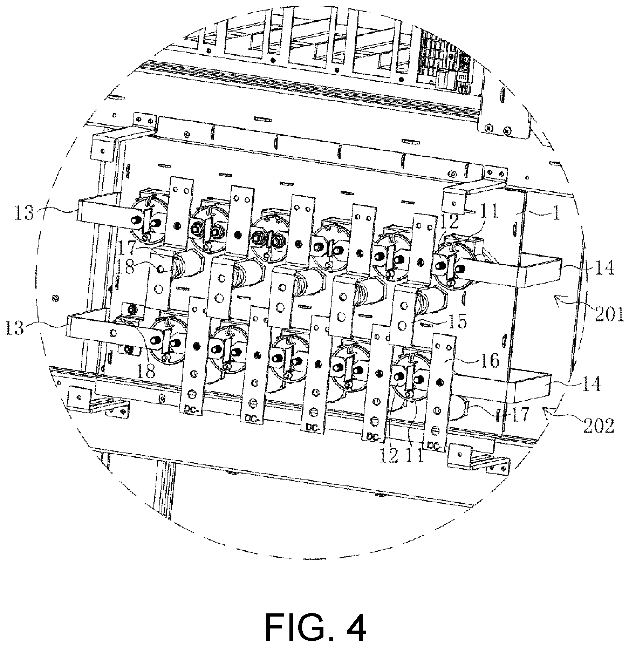

Corresponding to the 600kW, 500A power distribution system shown in FIG. 1, FIG. 2 to FIG. 4 illustrate the internal structure of the corresponding 600kW rectifier cabinet, which includes a ring loop mounting plate 1, relays 11, a first connecting copper bus bar 12, a second connecting copper bus bar 13, a third connecting copper bus bar 14, a DC output copper bus positive 15, a DC output copper bus negative 16, a first insulator 17, a second insulator 18; furthermore, a module compartment 2, a power module, and a tail plug harnesses are included.

Specifically, the relays 11 are approximately 250A, with a total of 40, including 10 first positive relays and 10 first negative relays in the first annular structure 100, as well as 10 second positive relays and 10 second negative relays in the second annular structure 200; these relays are respectively mounted on the ring loop mounting plate 1 through flange nuts. During configuration, 10 first positive relays are connected through the first connecting copper bus bar 12, the second connecting copper bus bar 13, and the third connecting copper bus bar 14 to form the first positive loop 101; 10 first negative relays are connected through the first connecting copper bus bar 12, the second connecting copper bus bar 13, and the third connecting copper bus bar 14 to form the first negative loop 102; the first positive loop 101 and the first negative loop 102 form the first annular structure 100; 10 second positive relays are connected through the first connecting copper bus bar 12, the second connecting copper bus bar 13, and the third connecting copper bus bar 14 to form the second positive loop 201; 10 second negative relays are connected through the first connecting copper bus bar 12, the second connecting copper bus bar 13, and the third connecting copper bus bar 14 to form the second negative loop 202; and the second positive loop 201 and the second negative loop 202 form the second annular structure 200.

The ring loop mounting plate 1 is also equipped with the second insulator 18, specifically a 40mm high insulator, used to support the second connecting copper bus bar 13 and the third connecting copper bus bar 14 on the front and/or back side. In actual configuration, combination screws are adopted to fix the second connecting copper bus bar 13 and the third connecting copper bus bar 14 on the second insulator 18, ensuring the tightness of each loop.

The ring loop mounting plate 1 is also equipped with the first insulator 17 corresponding to each negative loop, specifically a 60mm high insulator. The DC output copper bus negative 16 is arranged together with the first insulator 17 and the first connecting copper bus bar 12 through combination screws. The ring loop mounting plate 1 is also equipped with a 100mm high insulator composed of the first insulator 17 and the second insulator 18 corresponding to each positive loop. The first insulator 17 and the second insulator 18 are combined through set screws, and the DC output copper bus positive 15 is arranged together with the 100mm high insulator and the first connecting copper bus bar 12 through combination screws.

The power module is 40kW, correspondingly placed in the module compartment 2 above. Each tail plug harness is connected to the DC output copper bus positive 15 and DC output copper bus negative 16 in sequence through combination screws. The DC output copper bus positive 15 and DC output copper bus negative 16 without tail plug harness connection, meaning no power module is connected, have their holes filled with combination screws. Each DC output copper bus positive 15 and DC output copper bus negative 16 are then connected to each gun port through external cables.

It should be noted that by adopting two annular structures, although the quantity of insulators has also doubled, the cost of insulators is very low and MAY be basically ignored, and the overall cost is still greatly reduced. In addition, the quantity of connecting copper bus bars has also doubled, but copper bus bars are different from cables. When the current doubles in cables, the cross-sectional area needs to be increased by an additional margin on top of doubling to ensure its heat dissipation and other working requirements. Therefore, when cables change from large current to two small currents, their cost is reduced significantly, while when copper bus bars change from large current to two small currents, the cost remains basically unchanged. In other words, insulators and connecting copper bus bars do not have a significant impact on the overall cost.

As may be known from the above content, the present disclosure provides a charging pile with a reasonable structural arrangement, convenient configuration and maintenance.

### Third Embodiment:

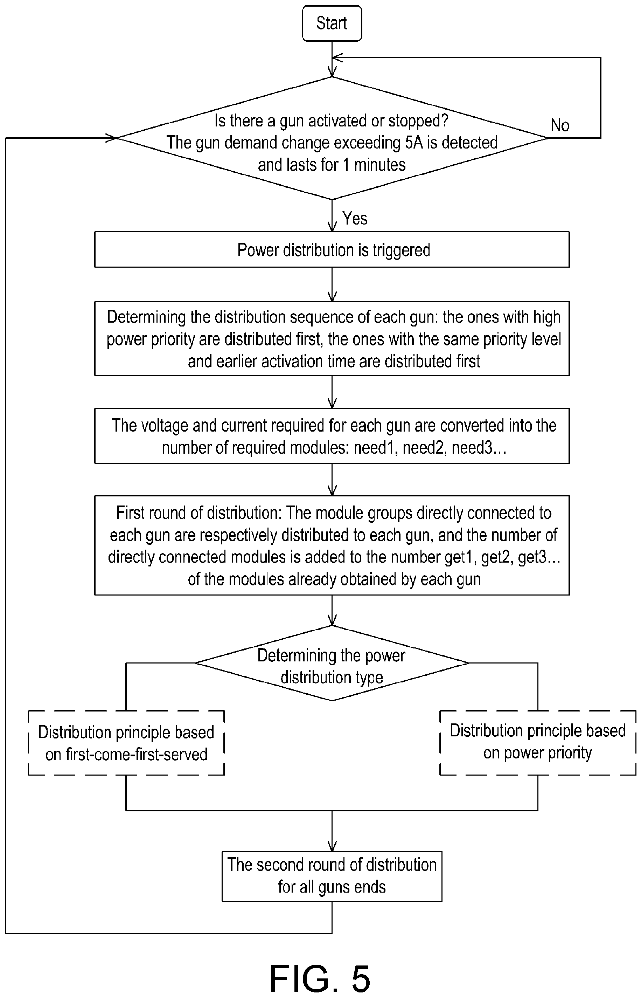

As shown in FIG. 5, this embodiment provides a power distribution method for a charging pile using the power distribution system described in First Embodiment. The power distribution method includes the following steps.

S1: Detecting whether power distribution is triggered.

Power distribution is not triggered during non-charging or normal charging processes; power distribution is only triggered when the system detects a gun starting or stopping. The starting and stopping of guns may be determined by detecting the current of each gun through the detection module. Power distribution is triggered when the detected current change reaches a set condition. For example, power distribution may be triggered when a gun current demand change exceeding 5A is detected and lasts for 1 minutes.

S2: If so, performing a first round of distribution for each output terminal that needs charging, distributing the power module group directly connected to each output terminal correspondingly to each output terminal.

If power distribution is triggered, power distribution needs to be performed for each gun port that needs charging. The distribution sequence for each gun may be determined first. When determining the distribution sequence for guns, it may be first determined whether to distribute based on first-come-first-served or power priority. If distributed based on first-come-first-served principle, all are sorted according to the order of start-up time; if distributed based on power priority, those with higher power priority are placed before those with lower power priority, and those with the same power priority are sorted according to the order of start-up time. Then proceed with the first round of distribution, the power module group directly connected to each gun is correspondingly distributed to each gun according to the distribution sequence. To facilitate subsequent calculations and distributions, the power demand of each gun may be converted into the number of power modules needed, i.e., need1 to needM, where needM represents the number of power modules required by the M-th gun port; and after the first round of distribution is completed, the number of power modules already obtained by each gun, i.e., get1 to getM, is increased by the number of power modules directly connected thereto, where getM represents the number of power modules already obtained by the M-th gun port.

S3: Performing a second round of distribution for each output terminal that needs charging according to the power distribution type, distributing the idle power module group to each output terminal.

After the first round of power distribution for each gun port is performed, a second round of distribution is needed to distribute the idle power module groups in the system to these gun ports, until the power distributed to these gun ports all meet their power requirements, or there are no more idle power module groups available for distribution in the system. The second round of distribution may be performed based on first-come-first-served or power priority

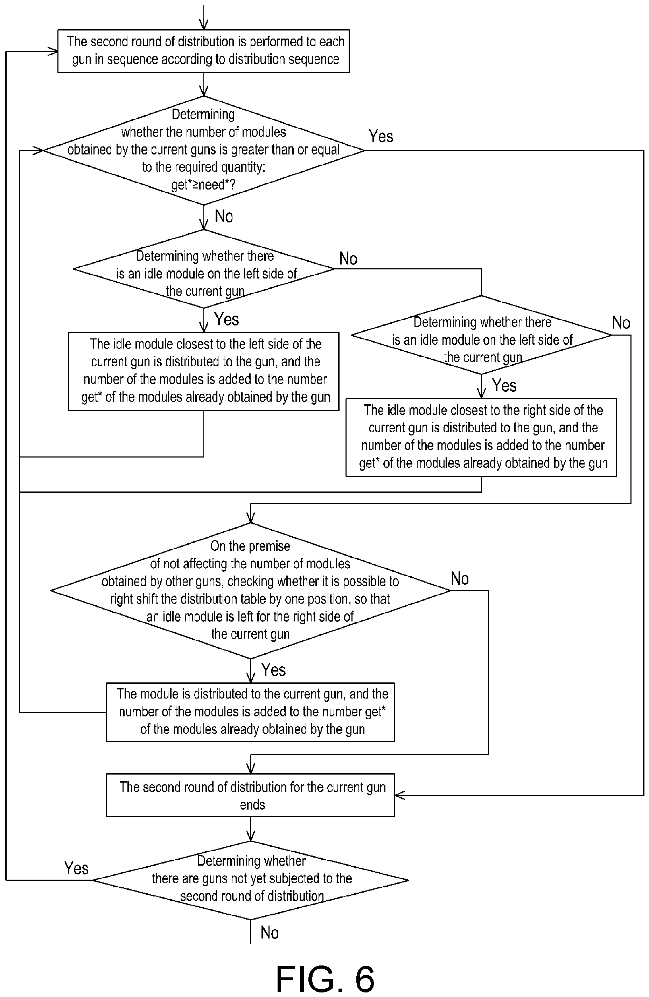

As shown in FIG. 6, if the power distribution type in step S3 is first-come-first-served distribution principle, then the second round of distribution is performed for each output terminal in the order of first-come-first-served; the second round of distribution for each output terminal includes the following steps.

S301: Detecting whether the power already obtained by the current output terminal is greater than or equal to the power requirement.

Specifically, comparison may be made between the number get* of power modules already obtained by the current gun port and the number need* of power modules required, i.e., determine whether get* ≥ need* is true.

S302: If so, the second round of distribution for the current output terminal ends.

If get* ≥ need* is true, the second round of distribution for the current gun port ends; proceed to the second round of distribution for the next gun port.

S303: If not, the idle power module groups are distributed to the current output terminal until the power obtained by the current output terminal meets its power requirement or there are no more idle power module groups available for distribution.

If get* ≥ need* is not true, i.e., get* < need*, then the idle power module groups need to be distributed to the current gun port in sequence. After each distribution of an idle power module group, a comparison needs to be made, i.e., comparing whether the number of power modules already obtained by the current gun port is greater than or equal to its required quantity. If the condition is not satisfied, distribution is continued until the number of power modules already obtained by the current gun port is greater than or equal to its required quantity or there are no more idle power module groups available for distribution, then proceed to the second round of distribution for the next gun port.

In step S303, distributing the idle power module groups to the current output terminal until the power obtained by the current output terminal meets its power requirement or there are no more idle power module groups available for distribution specifically includes:

S3031: First, it is detected whether there is an idle power module group between the left side of the current output terminal and the closest output terminal that needs charging among the M output terminals in the annular structure. If so, the idle power module groups on the left side are distributed to the current output terminal in sequence from near to far until the power obtained by the current output terminal is greater than or equal to the power requirement, then the second round of distribution for the current output terminal ends.

The clockwise direction of the ring is defined as the left side direction, i.e., the left side direction when standing outside the ring and facing the inside of the ring. If there is an idle power module group between the left side of the current gun port and the closest gun port that needs charging, then the closest idle power module group on the left side is distributed to the current gun port each time, and the number of power modules in that power module group is added to the number get* of modules already obtained by that gun port. Then it is compared again whether the number of power modules already obtained by the current gun port is greater than or equal to its required quantity, if the condition is not satisfied, the idle power module group on the left side is continuously detected and distributed, until the number of power modules already obtained by the current gun port meets the requirement, then the second round of distribution for the current gun port ends.

S3032: If there are no idle power module groups on the left side, or if the power obtained by the current output terminal is still less than the power requirement after all idle power module groups on the left side have been distributed to the current output terminal, then it is detected whether there is an idle power module group between the right side of the current output terminal and the closest output terminal that needs charging. If so, the idle power module groups on the right side are distributed to the current output terminal in sequence from near to far until the power obtained by the current output terminal is greater than or equal to the power requirement, then the second round of distribution for the current output terminal ends.

The counterclockwise direction of the ring is defined as the right side direction, i.e., the right side direction when standing outside the ring and facing the inside of the ring. After all idle power modules on the left side of the current gun port have been distributed, if there is an idle power module group between the right side of the current gun port and the closest gun port that needs charging, then the closest idle power module group on the right side is distributed to the current gun port each time, and the number of power modules in that power module group is added to the number get* of modules already obtained by that gun port. Then it is compared again whether the number of power modules already obtained by the current gun port is greater than or equal to its required quantity, if the condition is not satisfied, the idle power module groups on the right side are continuously detected and distributed, until the number of power modules already obtained by the current gun port meets the requirement, then the second round of distribution for the current gun port ends.

S3033: If there are no idle power module groups on the right side, or if the power obtained by the current output terminal is still less than the power requirement after all idle power module groups on the right side have been distributed to the current output terminal, then it is detected from the right side in sequence from near to far whether there are still idle power module groups in the M output terminals. If not, the second round of distribution for the current output terminal ends; if so, it is checked whether it is possible to right shift the distribution table of the output terminal between the right side of the current output terminal and the idle power module group to leave another idle power module group on the right side of the current output terminal that may be distributed to the current output terminal, until the power obtained by the current output terminal is greater than or equal to the power requirement. If the power obtained by the current output terminal is still less than the power requirement after all idle power module groups are completely distributed, then the second round of distribution for the current output terminal ends.

It is detected from the right side direction whether there are still idle power module groups in all gun ports, and the idle power module group is not between the current gun port and the closest gun port that needs charging on the left or right side, the present embodiment aims to invoke such idle power module group. Specifically, if such an idle power module group is detected, the distribution table of the gun port between the right side of the current gun port and the idle power module group is right-shifted by at least one position, so that another power module group may be left on the right side of the current gun port to be distributed to the current gun port. In other words, the gun ports between the right side of the current gun port and the idle power module group are redistributed, making the gun ports invoke that idle power module group, while leaving an idle power module group on the left side thereof for the current gun port. However, the premise is to ensure that these gun ports may at least be distributed with the original number of power modules for them. After the current gun port is distributed with another idle power module group, the number of power modules in that power module group is added to the number get* of power modules already obtained by that gun port. Then it is compared again whether the number of power modules already obtained by the current gun port is greater than or equal to its required quantity. If the condition is not satisfied, such idle power module groups are continuously detected and distributed, until the number of power modules already obtained by the current gun port meets the requirement, or until there are no more such distributable idle power module groups and the number of power modules already obtained by the current gun port still does not meet the requirement, then the second round of distribution for the current gun port ends.

For example, referring to FIG. 1, there are three vehicles A, B, and C coming for charging. Vehicle A has a power requirement of 240kW, vehicle B has a power requirement of 160kW, and vehicle C has a power requirement of 200kW. Vehicles A, B, and C plug in their guns in sequence, with vehicle A plugging into gun #1, vehicle B plugging into gun #2, and vehicle C plugging into gun #8.

When power distribution is triggered, the first round of distribution is performed first. A total power of 80kW of two power modules directly connected to gun #1 is distributed to A. A total power of 40kW of one power module directly connected to gun #2 is distributed to B. A total power of 40kW of one power module directly connected to gun #8 is distributed to C.

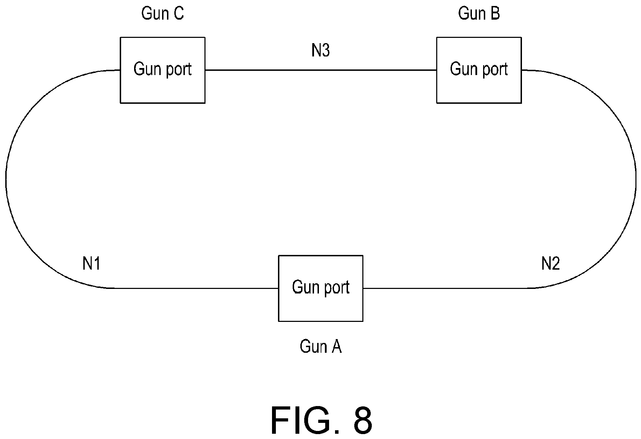

Then, the second round of power distribution is performed. Referring to FIG. 8, distribution for gun A is performed first. The system first detects whether there are any idle power module groups between the left side of gun A and gun C, i.e., checking if there are any idle modules in the remaining gun port N1. It is detected that #10 is idle, and one 40kW power module directly connected to #10 is distributed to gun A. At this point, the power that gun A may obtain is 120kW < 240kW, so detection is continuously performed on the left side. It is found that that #4 is idle, and two 40kW power modules directly connected to #4 are distributed to gun A. At this point, the power that gun A may obtain is 200kW, which still does not meet the requirement of 240kW, so detection is continuously performed on the left side. It is found that #8 is already occupied by gun C. At this point, there are no more idle modules in the remaining gun port N1, so detection is performed on the right side, i.e., checking if there are any idle modules in the remaining gun port N2. It is found that #5 on the right side is idle, and 40kW power module directly connected thereto is distributed to gun A. At this point, the power that gun A may obtain is 240kW. The power distribution for gun A ends, and the power distribution for gun B begins.

Gun B first checks whether there are any idle power module groups between the left side of gun B and gun A, i.e., in the remaining gun port N2. It is detected that #9 is idle, and two 40kW power modules directly connected to #9 is distributed to gun B. At this point, the power that gun B may obtain is 120kW < 160kW, so detection is continuously performed on the left side. It is found that #3 is idle, and the 40kW power module directly connected to #3 is distributed to gun B. At this point, the power that gun B may obtain is 160kW. The power distribution for gun B ends, and the power distribution for gun C begins.

Gun C first checks whether there are any idle power module groups between the left side of gun C and gun B, i.e., in the remaining gun port N3. It is found that only module #6 is idle, and the two 40kW power modules directly connected thereto are distributed to gun C. The power that gun C may obtain is 120kW < 200kW, so detection is continuously performed on the left side. However, there are no more idle power module groups available on the left side for invoking, so detection is performed on the right side, i.e., whether there are any idle modules in the remaining gun port N1. It is found that #4 and #10 in N1 have already been distributed to gun A, but found that #7 is still idle. Then it is checked whether it is possible to right shift the distribution table of the gun port between gun C and #7, which means right shifting the distribution table of gun A to free up #4 on the right side of gun C. As a result, the distribution for gun A changes from #1, #10, #4, #5 to #1, #10, #5, #7, with the power distributed to gun A remaining unchanged. At this point, #4 in the remaining gun port N1 is freed up and is invoked by gun C. The power that gun C may obtain is 200kW, and the power distribution ends.

This power distribution strategy based on a first-come-first-served distribution principle may be suitable for third-party stations, improving their turnover rate.

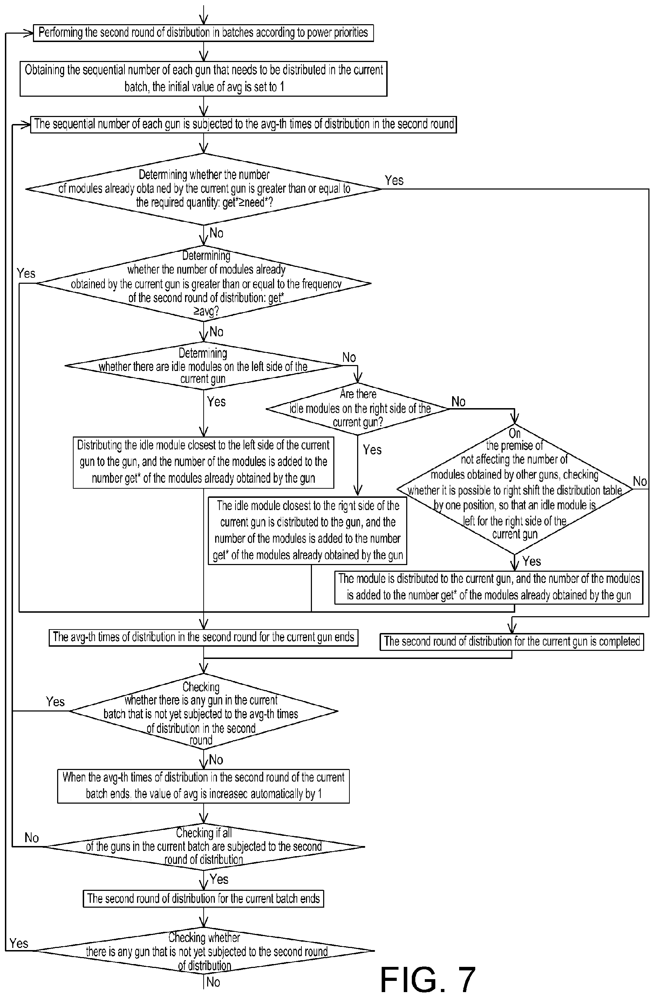

As shown in FIG. 7, if the power distribution type in step S3 is distribution according to power priority, then the second round of distribution to each output terminal is performed in batches according to power priority.

The power priority may be defined by each charging pile. For example, if the charging pile is a brand charging pile for a brand, then the power distribution priority for vehicles of that brand may be defined as the highest, enabling priority fulfillment of the energy replenishment needs of its own brand vehicles. Then the priorities of other brands may be defined, such as the priority of sub-brands or no priority set for all others. The priority of the corresponding gun port for vehicle may be detected through methods such as identifying the brand of vehicles or VIN code. Therefore, when distributing according to power priority, there may be multiple priorities, where the said multiple priorities refers to at least two priorities, and the second round of distribution needs to be performed in multiple batches according to the level of priority.

The second round of distribution for each batch includes the following steps:
S311: The output terminals that need to be distributed in the current batch and their sequence are determined, and individual distribution is cyclically performed to these output terminals according to the sequence, until the power obtained by each output terminal satisfies its power requirement or there are no more idle power module groups available for distribution. In each individual distribution, at most one idle power module group may be distributed to each output terminal.

Each batch may include one or multiple gun ports with the same priority. The gun numbers of these gun ports are obtained and sorted according to the sequence of gun insertion start time. Individual distribution is cyclically performed to these gun ports according to the sequence, i.e., individual distribution is first performed to the first gun port, then individual distribution is performed to other gun ports waiting for distribution in the current batch according to the sequence. After distribution is performed thoroughly to all gun ports, the distribution cycle is performed again to perform individual distribution to the first gun port, and so on. In each individual distribution, at most one idle power module group may be distributed to each gun port; and at the beginning of each individual distribution, a comparison needs to be made, i.e., compare whether the number of power modules already obtained by the current gun port is greater than or equal to its required quantity. If the condition is not satisfied, distribution is continued; if the condition is satisfied or there are no more idle power module groups that may be distributed to the current gun port, the second round of distribution for the current gun port is completely finished, and the cyclic individual distribution for other gun ports continues.

In step S311, the said individual distribution specifically includes the following steps:
S3111: Detecting whether the power already obtained by the current output terminal is greater than or equal to the power requirement.

Specifically, comparison may be made between the number get* of power modules already obtained by the current gun port and the number need* of power modules required, i.e., determine whether get* ≥ need* is true.

S3112: If so, the second round of distribution for the current output terminal ends, and the cyclic individual distribution for the remaining output terminals in the current batch continues.

If get* ≥ need* is true, the second round of distribution for the current gun port ends, and this gun port no longer participates in the cyclic individual distribution. The cyclic individual distribution for the remaining gun ports in the current batch continues.

S3113: If not, then:
S31131: Determining whether the number of power modules already obtained by the current output terminal is greater than or equal to the frequency of individual distribution for the current output terminal.

If get* ≥ need* is not true, i.e., get* < need*; then it is first determined whether the number get* of power modules already obtained by the current gun port is greater than or equal to the frequency avg of individual distribution for the current gun port, i.e., whether get* ≥ avg, with the initial value of avg set to 1.

S31132: If so, the individual distribution for the current output terminal in this loop ends, and the individual distribution for the next output terminal in this loop continues.

If get* ≥ avg is true, the individual distribution for the current gun port in this loop ends. At this point, no idle power module groups are distributed to this gun port, i.e., 0 idle power module groups are distributed to this gun port.

S31133: If not, then:
First, it is detected whether there is an idle power module group between the left side of the current output terminal and the closest output terminal that needs charging in the M output terminals in the annular structure. If so, the closest idle power module group on the left side is distributed to the current output terminal, and the individual distribution for the next output terminal in this loop continues.

Specifically, the clockwise direction of the ring is defined as the left side direction, i.e., the left side direction when standing outside the ring and facing the inside of the ring.

If there are no idle power module groups on the left side, then it is detected whether there is an idle power module group between the right side of the current output terminal and the closest output terminal that needs charging. If so, the closest idle power module group on the right side is distributed to the current output terminal, and the individual distribution for the next output terminal in this loop continues.

Specifically, the counterclockwise direction of the ring is defined as the right side direction, i.e., the right side direction when standing outside the ring and facing the inside of the ring.

If there are also no idle power module groups on the right side, then it is detected whether there are still idle power module groups in the M output terminals from the right side in order from near to far. If not, the individual distribution for the current output terminal in this loop ends, and the second round of distribution for the current output terminal ends, then the individual distribution for the next output terminal in this loop continues; if so, it is checked whether it is possible to right shift the distribution table of the output terminal between the right side of the current output terminal and the idle power module group to leave one more idle power module group on the right side of the current output terminal that may be distributed to the current output terminal. If possible, proceed with the distribution; if not possible, the individual distribution for the current output terminal in this loop ends, and the second round of distribution for the current output terminal ends, then the individual distribution for the next output terminal in this loop continues.

It is detected from the right side direction whether there are still idle power module groups in all gun ports, where the idle power module group is not between the current gun port and the closest gun port that needs charging on the left or right side, this embodiment aims to invoke such idle power module group. Specifically, if such an idle power module group is detected, the distribution table of the gun port between the right side of the current gun port and the idle power module group is right-shifted by at least one position, so that one more power module group may be left on the right side of the current gun port to be distributed to the current gun port. In other words, the gun ports between the right side of the current gun port and the idle power module group are redistributed, making the gun ports invoke that idle power module group, while leaving an idle power module group on the left side thereof for the current gun port. However, the premise is to ensure that these gun ports may at least be distributed with the original number of power modules for them. If the distribution table cannot be right-shifted, the individual distribution for the current gun port in this loop ends, and the second round of distribution for the current output terminal ends, then the individual distribution for the next gun port in this loop continues.

This distribution method may enable more uniform power distribution among guns of the same priority; especially when the power of each output terminal is the same or sequentially arranged in an alternating pattern with intervals, the distribution may be more evenly distributed.

For example, referring to FIG. 1, there are three vehicles A, B, and C coming for charging; Vehicle A requires a power of 240kW, Vehicle B requires a power of 160kW, and Vehicle C requires a power of 200kW. Vehicle B plugs in first (Gun #1), Vehicle C follows closely and plugs in (Gun #2), and Vehicle A plugs in last (Gun #8). This station is a charging pile for the brand of Vehicle A, therefore the power priority of Vehicle A is higher than that of Vehicle B and Vehicle C, while Vehicle B and Vehicle C have the same priority.

When power distribution is triggered, the first round of distribution is performed first, the power of one power module directly connected to Gun #8, totaling 40kW, is distributed to Vehicle A; the power of two power modules directly connected to Gun #1, totaling 80kW, is distributed to Vehicle B; and the power of one power module directly connected to Gun #2, totaling 40kW, is distributed to Vehicle C.

Then, the second round of power distribution is performed. The system determines that Vehicle A has high priority by identifying the brand or VIN code of Vehicle A, so power distribution for Vehicle A is performed first. The priority may be determined before the first round of distribution. First, the left side of Gun A is checked, and it is found that Gun #6 on the left is idle. The two 40kW power modules directly connected thereto are invoked to Gun A, at this point Gun A may obtain a power of 120kW < 240kW. Therefore, the left side is checked next, and it is found that Gun #2 is already occupied, so the right side is checked next. It is found that Gun #4 is idle, and two 80kW power modules directly connected to Gun #4 are invoked. At this point, Gun A may obtain a power of 200kW, which is still less than 240kW, so the right side is further checked. It is found that Gun #10 is idle, and one 40kW power module directly connected to Gun #10 is invoked. At this point, Gun A may obtain a power of 240kW. The power distribution for Gun A ends, and the power distribution for Gun B and Gun C begins.

Since Vehicle B and Vehicle C have the same power priority, and Vehicle B plugged in earlier, the first distribution of the second round is performed for Vehicle B first. It is first detected that the number of power modules directly connected to Gun B is two, which is greater than or equal to its distribution frequency of 1 in the second round, so the first distribution is performed for Gun C. It is detected that the number of power modules directly connected to Gun C is 1, which is also greater than or equal to its distribution frequency of 1 in the second round. The first loop ends, and the distribution frequency increases by 1. Then, the loop continues to perform the second distribution for Gun B; it is detected that the number of power modules distributed to Gun B is still two, which is still greater than or equal to its distribution frequency of 2 in the second round, so the second distribution is performed for Gun C. It is detected that the number of power modules distributed to Gun C is 1, which is less than its distribution frequency of 2 in the second round, so distribution is performed for Gun C. First, the left side of Gun C is checked, and it is found that Gun #9 is idle. Two 40kW power modules directly connected to Gun #9 are invoked. At this point, Gun C may obtain a power of 120kW < 200kW. The second loop ends, and the distribution frequency increases by 1 again. Then, the third distribution is performed for Gun B. It is detected that the number of power modules distributed to Gun B is still two, which is less than its distribution frequency of 3 in the second round, so distribution is performed for Gun B. The left side of Gun B is checked, and it is found that Gun #10 has been invoked by Gun A. The right side starts to be checked, and it is found that Gun #5 is idle. One 40kW power module directly connected to Gun #5 is invoked. At this point, Gun B may obtain a power of 120kW < 160kW, so the third distribution is performed for Gun C. It is detected that the number of power modules distributed to Gun C is 3, which is greater than or equal to its distribution frequency of 3 in the second round. The third loop ends, and the distribution frequency increases by 1; then, the 4th distribution is performed for Gun B. It is detected that the number of power modules distributed to Gun B is 3, which is less than its distribution frequency of 4 in the second round, so distribution is performed for Gun B. The right side of Gun B is further checked, and it is found that Gun #7 is idle. Two 40kW power modules directly connected to Gun #7 are invoked. At this point, Gun B may obtain a power of 200kW, which is greater than its power requirement. The power distribution for Gun B ends; the fourth distribution continues for Gun C. It is detected that the number of power modules distributed to Gun C is 3, which is less than its distribution frequency of 4 in the second round, so distribution is performed for Gun C. The left side of Gun C is further checked, and it is found that Gun #3 is idle. One 40kW power module directly connected to Gun #3 is invoked. At this point, Gun C may obtain a power of 160kW. Although the power of 160kW does not meet its power requirement, the distribution for Gun C also ends because there are no more idle power module groups available for further distribution.

This power distribution strategy based on power priority may be suitable for original equipment manufacturer (OEM) brand stations, improving brand user loyalty.

The power distribution method described in this embodiment may be applied to charging piles, and in other embodiments, it may also be applied to other charging equipment.

From the above content, it may be known that the power distribution method provided in this embodiment has multiple distribution modes. It may be that power is directly distributed on a first-come-first-served basis, which is suitable for third-party stations to improve their turnover rate. It may also be that power is distributed according to power priority, which is suitable for OEM brand stations to improve their brand user loyalty. Moreover, the distribution among output terminals with the same priority is more uniform.

## Claims

1. A power distribution system, comprising:
a first annular structure (100), wherein the first annular structure (100) comprises M first relay groups, M≥3, the M first relay groups are connected end to end in a ring shape, and one first connector is disposed between every two of the adjacent first relay groups;
a second annular structure (200), wherein the second annular structure (200) comprises M second relay groups, the M second relay groups are connected end to end in a ring shape, and one second connector is disposed between every two of the adjacent second relay groups;
a plurality of power modules, wherein a portion of the plurality of power modules are configured to connect with the first connector, and another portion of the plurality of power modules are configured to connect with the second connector; and
M output terminals, wherein one of the output terminals corresponds to and is directly connected to one of the first connector and one of the second connector, and at least one of the first connector and the second connector corresponding to and directly connected to each of the output terminal is connected with a power module.

2. The power distribution system according to claim 1, wherein a plurality of the power modules are evenly distributed to connect with the first connector and the second connector.

3. The power distribution system according to claim 2, wherein the first connector is connected to a total of X power modules, the second connector is connected to a total of Y power modules, X+Y=P/E, where P is a total power of the power distribution system, E is a power of a single power module, and the P and the E are both in unit of kW.

4. The power distribution system according to claim 1, wherein the M output terminals are set to form the ring shape, and power of power module groups directly connected to the M output terminals is set to be the same or sequentially distributed in an alternating pattern with intervals.

5. The power distribution system according to claim 2, wherein the M output terminals are set to form the ring shape, and power of power module groups directly connected to the M output terminals is set to be the same or sequentially distributed in an alternating pattern with intervals.

6. The power distribution system according to claim 3, wherein the M output terminals are set to form the ring shape, and power of power module groups directly connected to the M output terminals is set to be the same or sequentially distributed in an alternating pattern with intervals.

7. The power distribution system according to claim 1, wherein the first relay groups comprise first positive relays and first negative relays, the M first positive relays and the M first negative relays are respectively connected end to end to form a first positive loop (101) and a first negative loop (102), wherein one first positive connector is disposed between every two of the adjacent first positive relays for connecting the corresponding output terminal and a positive electrode of the corresponding power module, and wherein one first negative connector is disposed between every two of the adjacent first negative relays for connecting the corresponding output terminal and a negative electrode of the corresponding power module; the second relay groups comprise second positive relays and second negative relays, the M second positive relays and the M second negative relays are respectively connected end to end to form a second positive loop (201) and a second negative loop (202), wherein one second positive connector is disposed between every two of the adjacent second positive relays for connecting the corresponding output terminal and the positive electrode of the corresponding power module, and a second negative connector is disposed between every two of the adjacent second negative relays for connecting the corresponding output terminal and the negative electrode of the corresponding power module.

8. A power distribution method for the power distribution system according to claim 1, comprising:
detecting whether power distribution is triggered; if so, performing a first round of distribution for each of the output terminals that needs charging, and distributing power module groups directly connected to each of the output terminals correspondingly to each of the output terminals; and
performing a second round of distribution for each of the output terminals that needs charging according to a power distribution type, and distributing idle power module groups to each of the output terminals.

9. The power distribution method according to claim 8, wherein the power distribution type is first-come-first-served distribution principle, that is, the second round of distribution is performed for each of the output terminals in an order of first-come-first-served; wherein performing the second round of distribution for each of the output terminals comprises:
detecting whether a power already obtained by a current output terminal is greater than or equal to a power requirement;
if so, ending the second round of distribution for the current output terminal;
if not, distributing the idle power module groups to the current output terminal until the power obtained by the current output terminal meets the power requirement or there are no more the idle power module groups available for distribution;
wherein distributing the idle power module groups to the current output terminal until the power obtained by the current output terminal meets the power requirement or there are no more the idle power module groups available for distribution comprises:
detecting whether there is the idle power module group between a left side of the current output terminal and a closest output terminal that needs charging among the M output terminals in an annular structure; if so, distributing the idle power module groups on the left side to the current output terminal in sequence from near to far until the power obtained by the current output terminal is greater than or equal to the power requirement, then ending the second round of distribution for the current output terminal;
if there are no idle power module groups on the left side, or if the power obtained by the current output terminal is still less than the power requirement after all of the idle power module groups on the left side have been distributed to the current output terminal, then detecting whether there is the idle power module group between a right side of the current output terminal and a closest output terminal that needs charging; if so, distributing the idle power module groups on the right side to the current output terminal in sequence from near to far until the power obtained by the current output terminal is greater than or equal to the power requirement, then ending the second round of distribution for the current output terminal;
if there are no idle power module groups on the right side, or if the power obtained by the current output terminal is still less than the power requirement after all of the idle power module groups on the right side have been distributed to the current output terminal, then detecting from the right side in sequence from near to far whether there are still the idle power module groups in the M output terminals, if not, ending the second round of distribution for the current output terminal; if so, checking whether it is possible to right shift a distribution table of an output terminal between the right side of the current output terminal and the idle power module group to leave another idle power module group on the right side of the current output terminal that is able to be distributed to the current output terminal, until the power obtained by the current output terminal is greater than or equal to the power requirement; if the power obtained by the current output terminal is still less than the power requirement after all of the idle power module groups are completely distributed, then ending the second round of distribution for the current output terminal.

10. The power distribution method according to claim 8, wherein the power distribution type is based on power priority distribution, that is, the second round of distribution is performed for each of the output terminals in batches according to power priority; wherein performing the second round of distribution in batches comprises:
determining the output terminals that need to be distributed in a current batch and a sequence thereof, and cyclically performing individual distribution to the output terminals according to the sequence, until a power obtained by each of the output terminals satisfies a power requirement or there are no more the idle power module groups available for distribution, wherein in each individual distribution, at most one of the idle power module groups is able to be distributed to each of the output terminals;
wherein the individual distribution comprises:
detecting whether a power already obtained by a current output terminal is greater than or equal to the power requirement;
if so, ending the second round of distribution for the current output terminal, and continuing the cyclic individual distribution for the remaining output terminals in the current batch;
if not, then:
determining whether a number of the power modules already obtained by the current output terminal is greater than or equal to a frequency of the individual distribution for the current output terminal;
if so, ending the individual distribution for the current output terminal in a current loop, and continuing the individual distribution for a next output terminal in the current loop;
if not, then:
detecting whether there is the idle power module group between a left side of the current output terminal and a closest output terminal that needs charging in the M output terminals in an annular structure, if so, distributing the closest idle power module group on the left side to the current output terminal, and continuing the individual distribution for the next output terminal in the current loop;
if there are no the idle power module groups on the left side, then detecting whether there is the idle power module group between a right side of the current output terminal and a closest output terminal that needs charging, if so, distributing the closest idle power module group on the right side to the current output terminal, and continuing the individual distribution for the next output terminal in the current loop;
if there are no the idle power module groups on the right side, then detecting whether there are still the idle power module groups in the M output terminals from the right side in order from near to far, if not, ending the second round of distribution for the current output terminal, then continuing the individual distribution for the next output terminal in the current loop; if so, checking whether it is possible to right shift a distribution table of an output terminal between the right side of the current output terminal and the idle power module group to leave another idle power module group on the right side of the current output terminal that is able to be distributed to the current output terminal, if possible, proceeding with the distribution; if not possible, ending the second round of distribution for the current output terminal ends, then continuing the individual distribution for the next output terminal in the current loop.

11. A charging pile, comprising the power distribution system according claim 1.

12. A charging pile, comprising the power distribution system, adopting the power distribution method according to claim 8.
